# EUROPÄISCHE PATENTSCHRIFT

(11) **EP 1 641 665 B1**
(45) Veröffentlichungstag und Bekanntmachung des Hinweises auf die Patenterteilung: **08.08.2007**
(21) Anmeldenummer: 04733823.1
(22) Anmeldetag: 19.05.2004
(51) Int. Cl.: B60T 8/34, F15B 1/24, F16J 15/56

(54) **KOLBENSPEICHER**
PISTON-TYPE ACCUMULATOR
ACCUMULATEUR A PISTON

(30) Priorität: 26.06.2003 DE 10328809; 16.12.2003 DE 10358847
(43) Veröffentlichungstag der Anmeldung: 05.04.2006
(73) Patentinhaber: Continental Teves AG & Co. oHG, 60488 Frankfurt (DE)
(72) Erfinder: BRIESEWITZ, Rüdiger, 60385 Frankfurt am Main (DE); OTTO, Albrecht, 61137 Schöneck (DE); DINKEL, Dieter, 65824 Schwalbach (DE); ZENTGRAF, Hans-Georg, 65428 Rüsselsheim (DE)
(86) Internationale Anmeldenummer: PCT/EP2004/050848
(87) Internationale Veröffentlichungsnummer: WO 2004/113141

(56) Entgegenhaltungen:
- WO-A-96/20855
- WO-A-98/56630
- DE-A- 4 234 013
- DE-A- 10 236 966

## Beschreibung

Die Erfindung betrifft einen Kolbenspeicher, insbesondere einen Niederdruckspeicher für schlupfgeregelte hydraulische Kraftfahrzeug-Bremsanlagen, nach dem Oberbegriff des Patentanspruchs 1.

In der nach dem Prioritätstag der vorliegenden Patentanmeldung veröffentlichten DE 10236966 A1 sind bereits ein paar Kolbenspeicher in einem Hydraulikaggregat für schlupfgeregelte Kraftfahrzeugbremsanlagen gezeigt. Jeder Kolben ist innerhalb einer Dichtung axialbeweglich angeordnet, die in einer Gehäusebohrung des Hydraulikaggregats fixiert ist. Die Gehäusebohrung ist mittels eines Deckels verschlossen. Zur Fixierung der Dichtung ist in der Gehäusebohrung eine Ringnut vorgesehen, die hinsichtlich ihrer Anordnung einen hohen Fertigungsaufwand erfordert. Vor der Montage des Kolbens in der Gehäusebohrung muss darauf geachtet werden, dass die Dichtung korrekt in der Ringnut eingesetzt ist. Ansonsten kann es beim Einsetzen des Kolbens zu einer Beschädigung der Dichtung oder unter Umständen zum Herausrollen der Dichtung aus der Gehäusebohrung kommen, was erst durch eine Dichtigkeitsprüfung des Kolbenspeichers erkannt werden kann.

Die WO98/56630A offenbart einen Kolbenspeicher der gattungsbildenden Art, dessen Kolben in einer Gehäusebohrung als auch in einem die Gehäusebohrung verschließenden topfförmigen Deckel axial beweglich geführt ist, wozu der Deckel einen an den Außendurchmesser des Kolbens angepassten Innendurchmesser konstanter Größe aufweist. Wenn nicht ein ausreichender Freiraum zwischen dem Kolben und der Innenwand des Deckels eingehalten werden kann, besteht für den Kolben Klemmgefahr.

Daher ist es die Aufgabe der vorliegenden Erfindung, einen einfachen, funktionssicheren Kolbenspeicher zu schaffen, der einen genügend großen radialen Freigang im Deckel aufweist.

Diese Aufgabe wird erfindungsgemäß für einen Kolbenspeicher der angegebenen Art durch die kennzeichnenden Merkmale des Patentanspruchs 1 gelöst.

### Patentanspruchs 1 gelöst.

Bei der vorliegenden Erfindung handelt es sich um einen neuartigen Kolbenspeicher, bei dem die Gehäusebohrung als Sackbohrung ausgeführt ist, deren vom Bohrungsboden abgewandtes offene Ende sich nach außen als erweiterte Stufenbohrung fortsetzt, um eine möglichst einfache und dennoch sichere Aufnahme der Dichtung in die Gehäusebohrung zu gewährleisten. Das Anordnen der Dichtung in der Stufenbohrung kann hierbei vorteilhaft nach zwei Montagevarianten erfolgen, und zwar entweder vor dem Einsetzen des Kolbens in die Gehäusebohrung oder bevorzugt nach dem Einsetzen des Kolbens in die Gehäusebohrung, wozu das Ende des Kolbenhemds eine Anfasung aufweist.

Durch die Stufenbohrung wird eine Beschädigung der Dichtung verhindert bzw. eine vorgeschädigte Dichtung sofort erkannt. Ein weiterer Vorteil ergibt sich durch die weit außenliegende Anordnung der Dichtung in der Stufenbohrung, wodurch der Kolben während seines Arbeitshubs nahezu über die gesamte Länge seines Kolbenhemds mit der Speicherflüssigkeit in der Gehäusebohrung benetzt und damit auch geschmiert werden kann. Ein Trockenlauf und eine unzulässige Kolbenreibung wird somit auf verblüffend einfache Weise erfolgreich vermieden. Durch die großflächige Benetzung der Gehäusebohrung bis zur Dichtung wird ferner der Luftsauerstoff der Atmosphäre von der Gehäusebohrung und der Gleitfläche des Kolbens ferngehalten, so dass eine Oxidation bzw. Korrosion der Gehäusewand und der Mantelfläche (Gleitfläche) des Kolbens ausgeschlossen werden kann.

Weitere Merkmale, Vorteile und Anwendungsmöglichkeiten der Erfindung gehen aus den Unteransprüchen hervor und werden anhand der Beschreibung zweier Ausführungsbeispiele näher erläutert.

Es zeigen:
- Figur 1: einen Längsschnitt einer ersten Ausführungsform für einen Kolbenspeicher, der innerhalb eines ABS-Hydraulikaggregats angeordnet ist,
- Figur 2: einen Längsschnitt einer erfindungsgemäßen Ausführungsform für einen Kolbenspeicher, der einen alternativen Beitrag zur Fixierung der Dichtung im Kolbenspeicher des ABS-Hydraulikaggregats zeigt.

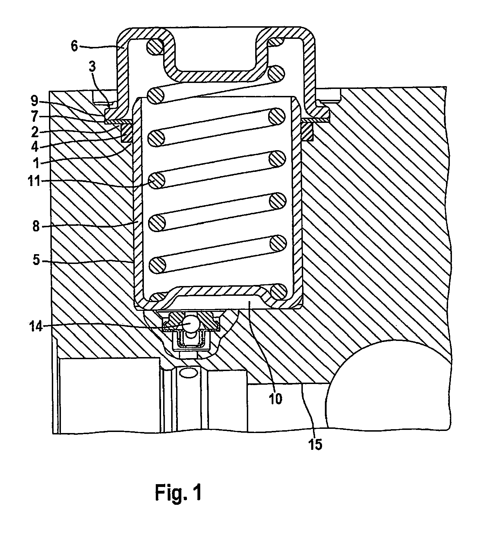

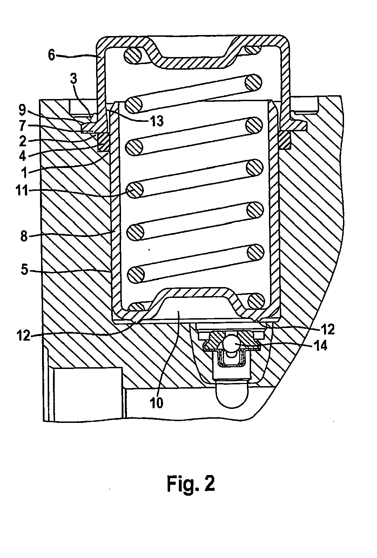

Die Figuren 1 und 2 zeigen jeweils einen Kolbenspeicher beispielhaft in der Funktion eines Niederdruckspeichers für eine schlupfgeregelte Kraftfahrzeugbremsanlage, mit jeweils einem axial beweglichen Kolben 8 innerhalb einer Gehäusebohrung 5, wobei zwischen dem Kolben 8 und der Gehäusebohrung 5 eine Dichtung 4 angeordnet ist, die innerhalb der Gehäusebohrung 5 fixiert ist. Die Gehäusebohrung 5 ist von einem Deckel 6 gasdicht verschlossen.

Die Erfindung sieht vor, dass die Gehäusebohrung 5 an ihrem vom Deckel 6 verschlossenen Ende als eine im Durchmesser erweiterte Stufenbohrung ausgebildet ist, in der die Dichtung 4 besonders einfach und funktionssicher fixiert ist.

Bezüglich den sich durch die Ausbildung der beiden Kolbenspeicher ergebenden Vorteilen wird auf die vorangegangene Beschreibungsseite 2 verwiesen.

Sowohl im Ausführungsbeispiel nach Figur 1 als auch nach der Erfindung gemäß Figur 2 unterteilt sich die Stufenbohrung in wenigstens eine erste und eine zweite Bohrungsstufe 1, 2. Zur einwandfreien Führung des Kolbens und zur gleichzeitigen Abstützung der Dichtung 4 an der ersten Bohrungsstufe 1 entspricht der Durchmesser der Stufenbohrung im Bereich der ersten Bohrungsstufe 1 dem Innendurchmesser der Gehäusebohrung 5.

Zum axialen Einführen und zur radialen Abstützung der Dichtung 4 innerhalb der Stufenbohrung dient die Wand der zweiten Bohrungsstufe 2, wozu die Stufenbohrung zwischen der ersten und zweiten Bohrungsstufe 1, 2 einen erweiterten Innendurchmesser aufweist, der an den Außendurchmesser der Dichtung 4 angepasst ist. Der Höhenabstand der zweiten Bohrungsstufe 2 gegenüber der ersten Bohrungsstufe 1 entspricht der für die Dichtung 4 erforderlichen Einbauhöhe.

Ferner weist in den Figuren 1 und 2 die Stufenbohrung vor der "atmosphärischen" Außenkante der Gehäusebohrung 5 eine dritte Bohrungsstufe 3 auf, die durch die plastische Verformung des Gehäusematerials der Gehäusebohrung 5 gebildet ist, welches den Deckel 6 in der Stufenbohrung fixiert.

Aus den Figuren 1, 2 geht ferner hervor, dass zwischen der zweiten und dritten Bohrungsstufe 2,3 ein Halteteil 7 vorgesehen ist, um die Dichtung 4 in ihrer Axiallage an der ersten Bohrungsstufe 1 möglichst einfach und funktionssicher zu fixieren. Hierzu stützt sich das Halteteil 7 unmittelbar an der zweiten Bohrungsstufe 2 ab und überdeckt die Dichtung 4 zumindest teilweise in Richtung der Kolbenmantelfläche (Kolbenhemd) . Der Außendurchmesser des Halteteils 7 ist immer an den Durchmesser der Stufenbohrung und der Innendurchmesser des Halteteils 7 ist immer an den Außendurchmesser des in der Gehäusebohrung 5 geführten Kolbens 8 angepasst.

In einer ersten Ausführungsform nach Figur 1 ist das Halteteil 7 als Ringscheibe ausgeführt, die von einem die Gehäusebohrung 5 verschließenden Rand 9 des Deckels 6 sowohl gegen die zweite Bohrungsstufe 2 als auch gegen die Dichtung 4 radial gepresst ist.

Die Figur 2 zeigt alternativ zur Ausbildung des Halteteils 7 als separat in die Stufenbohrung einzulegende Ringscheibe nunmehr das Halteteil 7 unmittelbar durch den Rand 9 eines die Gehäusebohrung 5 verschließenden Deckels 6 gebildet. Hierzu ist der dünnwandige Rand 9 des im wesentlichen topfförmig gestalteten Deckels 6 zur Herstellung einer Ringscheibenkontur rechtwinklig, d.h. horizontal nach außen abgekröpft. Zur Deckelbefestigung und Fixierung des Halteteils 7 an der zweiten Bohrungsstufe 2 ist die Außenfläche des abgekröpften Rands 9 vom plastisch verdrängten Gehäusematerial des Hydraulikaggregats überdeckt.

Der Deckel 6 ist ebenso wie der Kolben 8 sowohl in Figur 1 als auch in Figur 2 als vorzugsweise im Tiefziehverfahren hergestellter Topf ausgebildet, dessen Innendurchmesser im Bereich des Rands 9 zur sicheren Fixierung der Dichtung 4 in der Ausführungsform nach Figur 2 ein Minimalspiel gegenüber dem Außendurchmesser des Kolbens 8 aufweist.

Nach Figur 2 weist die Topfkontur des Deckels 6 im Anschluss an das Minimalspiel in Richtung des Topfbodens einen Abschnitt 13 auf, der zur großzügig tolerierten Einführung des Kolbens 8 in den Topf im Innendurchmesser trichterförmig erweitert ist. Dies hat den Vorteil, dass genügend radialer Freigang im Deckel 6 zur Verfügung steht, um während der Ladephase des Kolbenspeichers, wenn nämlich Flüssigkeit in die unterhalb des Topfbodens gelegene Kammer 10 der Gehäusebohrung 5 einströmt, ein ungehinderter (klemmfreier) Aufwärtshub des Kolbens 8 entgegen der zwischen dem Kolben 8 und dem Deckel 6 eingespannten Druckfeder 11 zu gewährleisten.

Somit ergibt sich in Figur 2 eine Wandstärkenzunahme des Deckels 6 in Richtung des rechtwinklig abgekröpften Rands 9, der das Halteteil 7 bildet, wodurch eine besonders steife Stützstruktur im Bereich des mechanisch hoch beanspruchten Deckelrands zustande kommt. Hierdurch lässt sich die bei der plastischen Verformung des Gehäusematerials auftretende Verstemmkraft am Rand 9 zur Deckelbefestigung verwindungsfrei aufnehmen. Außerdem kann durch die steife Stützstruktur des Rands 9, der gleichzeitig in Figur 2 die Funktion des Halteteils 7 inne hat, ein besonders hoher Berstdruck vom Deckel 6 aufgenommen werden.

In der Figur 2 ist der dünnwandige, tiefgezogene Kolbenboden in Richtung auf den Boden der Gehäusebohrung 5 mit kleinflächigen Stütznasen 12 versehen, die ein unerwünschtes Anhaften bzw. Festsaugen des Kolbens 5 am Boden der Gehäusebohrung 5 in der abgebildeten Entladestellung des Kolbenspeichers verhindern.

Da durch die Stütznasen 12 sowohl beim Laden als auch beim Entladen des Kolbenspeichers eine nahezu unveränderte Kolbenwirkfläche zur Verfügung steht, ergibt sich unter allen Betriebsbedingungen ein verbessertes Ansprechverhalten.

In den Figuren 1, 2 steht der Kolbenspeicher zum Entladen über ein im Boden der Gehäusebohrung 5 eingesetztes Rückschlagventil 14 mit der Saugseite einer ABS-Pumpe in Verbindung, die in einer Pumpenaufnahmebohrung 15 unterhalb des Rückschlagventils 14 eingesetzt ist. Ferner mündet zum Laden des Kolbenspeichers in den Boden der Gehäusebohrung 5 ein weiterer, jedoch in den Figuren nicht abgebildeter Hydraulikkanal ein, der mit den Bremsdruckabbauventilen des ABS-Hydraulikaggregats in Verbindung steht.

Durch die aufeinander abgestimmten und hiermit erläuterten baulichen Maßnahmen bleibt ein zwischen dem Kolben 8 und dem Deckel 6 evtl. vorhandener Lufteinschluss ohne Einfluss auf das Funktionsverhalten des Kolbenspeichers, so dass vorteilhaft auf eine Be- und Entlüftung des Deckels 6 verzichtet werden kann.

Die Betriebscharakteristik des Kolbenspeichers, insbesondere das Speichervolumen in der Kammer 10 lässt sich vorteilhaft durch die Variation der Druckfeder 11 und/oder des Tiefenmaßes im Deckel 6 beliebig einstellen, in den das angefaste offene Ende des Kolbens 8 während des Speicherladevorgangs eintaucht.

In den Figuren 1, 2 ist die Dichtung 4 bevorzugt als elastomerer Formring, insbesondere als O-Ring ausgeführt. Bei Wunsch oder Bedarf sind selbstverständlich alternative Ausführungsformen denkbar. Ebenso ist es denkbar, von der abgebildeten Bauform der Druckfeder 11, des Deckels 6 und des Kolbens 8 abzuweichen, ohne hierdurch den Erfindungsgedanken zu verlassen.

In den Figuren 1, 2 ist der Kolben- und auch der Deckelboden zur Zentrierung der Druckfeder 11 in Richtung auf die beiden Drahtwindungsenden eingezogen. Auch hiervon kann bei Wunsch oder Bedarf abgewichen werden, ohne jedoch Einfluss auf den Erfindungsgedanken zu nehmen. Bezugszeichenliste
- 1: Erste Bohrungsstufe
- 2: Zweite Bohrungsstufe
- 3: Dritte Bohrungsstufe
- 4: Dichtung
- 5: Gehäusebohrung
- 6: Deckel
- 7: Halteteil
- 8: Kolben
- 9: Rand
- 10: Kammer
- 11: Druckfeder
- 12: Stütznase
- 13: Abschnitt
- 14: Rückschlagventil

## Patentansprüche

1. Kolbenspeicher, insbesondere Niederdruckspeicher in einer schlupfgeregelten Kraftfahrzeugbremsanlage, mit einem axial beweglichen Kolben (8) in einer Gehäusebohrung (5), mit einer zwischen dem Kolben (8) und der Gehäusebohrung (5) angeordneten Dichtung (4), die innerhalb der Gehäusebohrung (5) fixiert ist und mit einem topfförmigen Deckel (6) zum Verschluss der Gehäusebohrung (5), wobei die Gehäusebohrung (5) an ihrem vom Deckel (6) verschlossenen Ende als eine im Durchmesser erweiterte Stufenbohrung ausgebildet ist, in der die Dichtung (4) fixiert ist, **dadurch gekennzeichnet, dass** im Arbeitshubbereich des Kolbens (8) der als Topf ausgebildete Deckel (6) in Richtung des Topfbodens zumindest einen Abschnitt (13) aufweist, der zur großzügig tolerierten Hindurchführung des Kolbens (8) im Innendurchmesser in Richtung des Topfbodens trichterförmig erweitert ist.

2. Kolbenspeicher nach Anspruch 1, **dadurch gekennzeichnet, dass** eine erste und eine zweite Bohrungsstufe (1, 2) innerhalb der Stufenbohrung angeordnet ist, wobei der Durchmesser der Stufenbohrung im Bereich der ersten Bohrungsstufe (1) dem Innendurchmesser der Gehäusebohrung (5) entspricht und wobei der Innendurchmesser der Stufenbohrung im Bereich der zweiten Bohrungsstufe (2) an den Außendurchmesser der Dichtung (4) angepasst ist.

3. Kolbenspeicher nach Anspruch 1 oder 2, **dadurch gekennzeichnet, dass** die Stufenbohrung an der Außenkante der Gehäusebohrung (5) von einer dritten Bohrungsstufe (3) begrenzt ist, die durch die plastische Verformung des Gehäusematerials gebildet ist, welches den Deckel (6) an der Stufenbohrung fixiert.

4. Kolbenspeicher nach Anspruch 2, **dadurch gekennzeichnet, dass** zwischen der zweiten und dritten Bohrungsstufe (2,3) ein Halteteil (7) zur Fixierung der Dichtung (4) an der ersten Bohrungsstufe (1) vorgesehen ist.

5. Kolbenspeicher nach Anspruch 4, **dadurch gekennzeichnet, dass** das Halteteil (7) unmittelbar an der zweiten Bohrungsstufe (2) anliegt, und dass die Dichtung (4) zumindest teilweise in Richtung auf die Kolbenmantelfläche vom Halteteil (7) überdeckt ist.

6. Kolbenspeicher nach Anspruch 4, **dadurch gekennzeichnet, dass** das Halteteil (7) als Ringscheibe ausgeführt ist, die von einem die Gehäusebohrung (5) verschließenden Deckel (6) gegen die zweite Bohrungsstufe (2) und gegen die Dichtung (4) gedrückt ist.

7. Kolbenspeicher nach einem der Ansprüche 4 bis 6, **dadurch gekennzeichnet, dass** der Außendurchmesser des Halteteils (7) an den Durchmesser der Stufenbohrung und der Innendurchmesser des Halteteils (7) an den Außendurchmesser des in der Gehäusebohrung (5) geführten Kolbens (8) angepasst ist.

8. Kolbenspeicher nach Anspruch 4, **dadurch gekennzeichnet, dass** das Halteteil (7) unmittelbar durch den Rand (9) eines die Gehäusebohrung (5) verschließenden Deckels (6) gebildet ist.

9. Kolbenspeicher nach Anspruch 8, **dadurch gekennzeichnet, dass** der Rand (9) des im wesentlichen topfförmigen Deckels (6) zur Herstellung einer Ringscheibenkontur rechtwinklig nach außen abgekröpft und außen vom plastisch verdrängten Gehäusematerial überdeckt ist.

10. Kolbenspeicher nach Anspruch 9, **dadurch gekennzeichnet, dass** der vorzugsweise im Tiefziehverfahren hergestellte Topf im Innendurchmesser im Bereich des Rands (9) zur Fixierung der Dichtung (4) ein Minimalspiel gegenüber dem Außendurchmesser des Kolbens (8) aufweist.

## Claims

1. Piston-type accumulator, in particular low-pressure accumulator in a slip-controlled motor vehicle brake system, with an axially movable piston (8) in a housing bore (5), with a seal (4) interposed between the piston (8) and the housing bore (5), which is fixed inside the housing bore (5) and includes a bowl-shaped cover (6) for closing the housing bore (5), and the housing bore (5), at its end closed by the cover (6), is designed as a stepped bore enlarged in diameter in which the seal (4) is fixed,
**characterized in that** in the working stroke area of the piston (8), the cover (6) that is designed as a bowl has at least one portion (13) in the direction of the bowl bottom, the inside diameter of which is expanded like a funnel in the direction of the bowl bottom in order to allow a generously tolerated passage of the piston (8).

2. Piston-type accumulator as claimed in claim 1,
**characterized in that** a first and a second bore step (1, 2) are arranged inside the stepped bore, and the diameter of the stepped bore in the area of the first bore step (1) corresponds to the inside diameter of the housing bore (5), while the inside diameter of the stepped bore in the area of the second bore step (2) is adapted to the outside diameter of the seal (4).

3. Piston-type accumulator as claimed in claim 1 or 2,
**characterized in that** the stepped bore at the outside edge of the housing bore (5) is limited by a third bore step (3) which is formed by the plastic deformation of the housing material that fixes the cover (6) at the stepped bore.

4. Piston-type accumulator as claimed in claim 2,
**characterized in that** a retaining part (7) is provided between the second and the third bore step (2, 3) in order to fix the seal (4) at the first bore step (1).

5. Piston-type accumulator as claimed in claim 4,
**characterized in that** the retaining part (7) bears directly against the second bore step (2), and **in that** the seal (4) is covered by the retaining part (7) at least partly in the direction of the peripheral piston surface.

6. Piston-type accumulator as claimed in claim 4,
**characterized in that** the retaining part (7) is configured as an annular washer which is pressed by a cover (6) that closes the housing bore (5) against the second bore step (2) and against the seal (4).

7. Piston-type accumulator as claimed in any one of claims 4 to 6,
**characterized in that** the outside diameter of the retaining part (7) is adapted to the diameter of the stepped bore, and the inside diameter of the retaining part (7) is adapted to the outside diameter of a piston (8) guided in the housing bore (5).

8. Piston-type accumulator as claimed in claim 4,
**characterized in that** the retaining part (7) is formed directly by the edge (9) of a cover (6) that closes the housing bore (5).

9. Piston-type accumulator as claimed in claim 8,
**characterized in that** the edge (9) of the essentially bowl-shaped cover (6) is bent off at right angles in an outward direction in order to provide the contour of an annular washer and is covered outside by the plastically deformed housing material.

10. Piston-type accumulator as claimed in claim 9,
**characterized in that** the bowl, which is preferably deepdrawn, in the inside diameter of the bowl in the area of the edge (9) has a minimum clearance with regard to the outside diameter of the piston (8) in order to fix the seal (4).

## Revendications

1. Accumulateur à piston, en particulier accumulateur basse pression dans un système de freinage de véhicule automobile à régulation du patinage, comportant un piston (8) déplaçable axialement dans un alésage de carter (5), une garniture d'étanchéité (4) disposée entre le piston (8) et l'alésage de carter (5) et qui est fixé à l'intérieur de l'alésage de carter (5) et comportant un couvercle (6) en forme de pot pour fermer l'alésage de carter (5), l'alésage de carter (5) étant réalisé à son extrémité fermée par le couvercle (6) sous la forme d'un alésage étagé de diamètre élargi dans lequel est fixée la garniture d'étanchéité (4), **caractérisé en ce que** dans la zone de la course de travail du piston (8), le couvercle (6) réalisé sous la forme d'un pot comporte, en direction du fond du pot, au moins un segment (13) dont le diamètre intérieur est élargi en forme d'entonnoir en direction du fond du pot, pour le passage avec une grande tolérance du piston (8).

2. Accumulateur à piston selon la revendication 1, **caractérisé en ce qu'**un premier et un second gradin d'alésage (1, 2) est disposé à l'intérieur de l'alésage étagé, le diamètre de l'alésage étagé correspondant, dans la zone du premier gradin d'alésage (1), au diamètre intérieur de l'alésage de carter (5) et le diamètre intérieur de l'alésage étagé étant adapté, dans la zone du second gradin d'alésage (2), au diamètre extérieur de la garniture d'étanchéité (4).

3. Accumulateur à piston selon la revendication 1 ou 2, **caractérisé en ce que** l'alésage étagé est limité, sur le bord extérieur de l'alésage de carter (5), par un troisième gradin d'alésage (3) qui est formé par la déformation plastique du matériau du carter qui fixe le couvercle (6) sur l'alésage étagé.

4. Accumulateur à piston selon la revendication 2, **caractérisé en ce qu'**un élément de retenue (7) est prévu entre le deuxième et le troisième gradin d'alésage (2, 3) pour fixer la garniture d'étanchéité (4) sur le premier gradin d'alésage (1).

5. Accumulateur à piston selon la revendication 4, **caractérisé en ce que** l'élément de retenue (7) s'applique directement contre le deuxième gradin d'alésage (2), et **en ce que** la garniture d'étanchéité (4) est recouverte au moins en partie dans la direction de la surface d'enveloppe du piston, par l'élément de retenue (7).

6. Accumulateur à piston selon la revendication 4, **caractérisé en ce que** l'élément de retenue (7) est réalisé sous la forme d'un disque annulaire qui est pressé par un couvercle (6), fermant l'alésage de carter (5), contre le deuxième gradin d'alésage (2) et contre la garniture d'étanchéité (4).

7. Accumulateur à piston selon l'une des revendications 4 à 6, **caractérisé en ce que** le diamètre extérieur de l'élément de retenue (7) est adapté au diamètre de l'alésage étagé et le diamètre intérieur de l'élément de retenue (7) au diamètre extérieur du piston (8) guidé dans l'alésage de carter (5).

8. Accumulateur à piston selon la revendication 4, **caractérisé en ce que** l'élément de retenue (7) est directement formé par le bord (9) d'un couvercle (6) fermant l'alésage de carter (5).

9. Accumulateur à piston selon la revendication 8, **caractérisé en ce que** le bord (9) du couvercle (6) sensiblement en forme de pot est coudé à angle droit vers l'extérieur pour réaliser un contour en disque annulaire, et est recouvert extérieurement par le matériau du carter refoulé plastiquement.

10. Accumulateur à piston selon la revendication 9, **caractérisé en ce que** le diamètre intérieur du pot, réalisé de préférence par procédé d'emboutissage profond, présente, dans la zone du bord (9), un jeu minimal par rapport au diamètre extérieur du piston (8), pour la fixation de la garniture d'étanchéité (4).
